# EUROPEAN PATENT SPECIFICATION

(11) **EP 0 491 410 B1**
(45) Date of publication and mention of the grant of the patent: **26.07.1995**
(21) Application number: 91203046.7
(22) Date of filing: 21.11.1991
(51) Int. Cl.: F01L 1/34, F16D 3/10

(54) **An improved timing variator**
Verbesserte Einrichtung zur Veränderung der Steuerzeiten
Variateur de calage de distribution amélioré

(30) Priority: 18.12.1990 IT 4175190
(43) Date of publication of application: 24.06.1992
(73) Proprietor: CARRARO S.P.A., I-35011 Campodarsego (Padova) (IT)
(72) Inventor: Tortul, Renzo, I-34070 S. Pier d'Isonzo (Gorizia) (IT)
(74) Representative: Cantaluppi, Stefano

(56) References cited:
- EP-A- 0 317 372
- DE-A- 3 619 956
- FR-A- 2 526 858
- GB-A- 2 162 246

## Description

This invention relates to a timing variator for changing the relative timing, or a shaft and a drive associated therewith, of the type comprising the features indicate in the preamble of claim 1.

A timing variator including the above noted features is known from DE-A-3 619 956.

Such variators are employed on internal combustion engines for changing the timing of the camshaft for the valve timing system relatively to the crankshaft to suit specific operational parameters of the engine during operation thereof. Known commercial embodiments provide two relative angular positions or timing settings for the affected shafts. These settings are to be obtained at the respective end-of-travel positions of the plunger and correspond normally to optimum timings for operation of the engine at low rpm and high rpm, respectively.

However, since the adjustment provided by the timing variator is limited to a relative rotation of the affected shafts, whereby a change tending, for example, to advance the opening of a valve will imply of necessity that the successive closing thereof be also advanced, with the dwell angle (which is controlled by the cam design) left unchanged, the two settings available represent a compromise with respect to optimum control of the valve timing system in relation to the operational parameters of the engine.

With currently known timing variator designs, it would be theoretically possible to adjust the relative timing of the camshaft and the crankshaft in a continous fashion by appropriate control of the pressure of the plunger working medium. But where (as is usually the case) the same pressurized oil is utilized to provide said medium as is used for engine lubrication purposes, the adjustment becomes too cumbersome for practical application to internal combustion engines. The engine lube oil pressure is, in fact, affected by parameters such as temperature, viscosity, engine conditions and rotational speed, which are unpredictable with any accuracy. Accordingly, difficulty is encountered in controlling as accurately as it would be required the true displacement of the plunger relatively to the variator hub which controls the timing change effected. Use is made, therefore, of the only two reliable settings, corresponding to the two end-of-travel positions of the plunger.

The underlying problem of this invention is to provide a timing variator of improved versatility adapted for use in an internal combustion engine environment without making the engine construction and control arrangements any more complicated.

This problem is solved by a timing variator as specified in claim 1 and claim 7.

Advantageously, said stopper means are to act on said plunger to halt it relatively to the hub when said working medium is applied to said plunger under a pressure within at least one first pressure range and move it from said intermediate position to said second end-of-travel position when said working medium is applied to said plunger under a pressure within a second pressure range.

The invention will be further described below with reference to four preferred embodiments thereof, shown by way of illustration and not of limitation in the accompanying drawings, where:
Figure 1 is a sectional view through a first embodiment of a timing variator according to the invention, shown at a first setting thereof;
Figure 2 shows the variator in Figure 1 at two different settings thereof, respectively in the top half and bottom half of the drawing;
Figures 3 and 4 are sectional views through a second embodiment of the timing variator according to the invention, shown at respectively corresponding settings with those of the preceding figures; and
Figures 5 and 6 show respective modifications of the timing variator in Figure 1 depicted, in the top half and the bottom half of the respective drawings at settings which correspond with those of Figure 2.

In the drawing figures, references 1a, 1b, 1c and 1d generally designate respective timing variators according to four embodiments of this invention. Said timing variators 1a-d are each intended for installation between the camshaft A of an internal combustion engine (not shown as such) and a timing belt (typically a rubber cogged belt) B whereby the valve timing system of the engine is driven. Similar or common parts in the four embodiments are denoted throughout by the same references.

The timing variator 1a is attached to shaft A through a hub 2 which is thread-engaged onto a threaded end section of the shaft. Said hub is passed through by an axial conduit 3 for feeding in oil or another working medium under a pressure, which conduit branches off into a number of radial distribution conduits to serve a timing control function to be described.

An annular plunger 5 is fitted over the hub 2, specifically over a cylindrical portion of the latter, for an axial sliding movement along said cylindrical portion of the hub. This hub portion is provided with axial splines 6 jointly defining a straight spline formation or toothing; in a complementary way, the plunger 5 is formed internally with mating splines 7 which form a complementary straight spline formation or toothing in engagement with the splines 6.

The hub 2-plunger 5 assembly is surrounded by a case 8 of generally cylindrical shape having one axial end, remote from the shaft A, which is sealed by means of a cover or cap 9.

Defined in the cover 9 is a blind seat 9a adapted to receive and support the free end of the hub 2. Said cover 9 also bounds, in co-operation with the hub 2, case 8, and plunger 5, an annular chamber 21 into which the conduits 4 are open.

The case 8 is provided on its exterior with captive screws 13 for mounting a cogged pulley 12 to be driven rotatively by the timing belt B; the interior of the case 8 is formed with a coarse pitch helical toothing 10 which meshes with a complementary toothing 11 provided on the outer surface of the plunger 5.

Shown at 15 is a coil spring fitted over the hub 2 and having its ends arranged to abut against an inside shoulder 16 of the plunger 5 and an outside shoulder on the hub 2 consisting of a radial flange 18 placed at the base of the latter.

The flange 18 is formed with a plurality of radial ports 18a for discharging, in operation, oil seeping past the plunger 5. The flange 18 is sandwiched between two radially contracting retainer rings 22, 23 of a kind known per se, which rings fit in respective grooves 22a, 23a formed at corresponding locations in the inner wall of the case 8.

The spring 15 constantly biases the plunger 5 toward a first end-of-travel position adjacent to the wall of the cover 9 which bounds the chamber 21. The plunger 5 is movable against the bias force of the spring 15 by the action of the pressurized oil which is being supplied into the chamber 21 to reach an opposite second end-of-travel position whereat it will abut with a radial flange 24 thereof against retainer ring 22.

All the embodiments of the timing variator 1a-d of this invention also comprise stopper means arranged to halt the plunger movement relatively to the hub at at least one intermediate position to said end-of-travel positions.

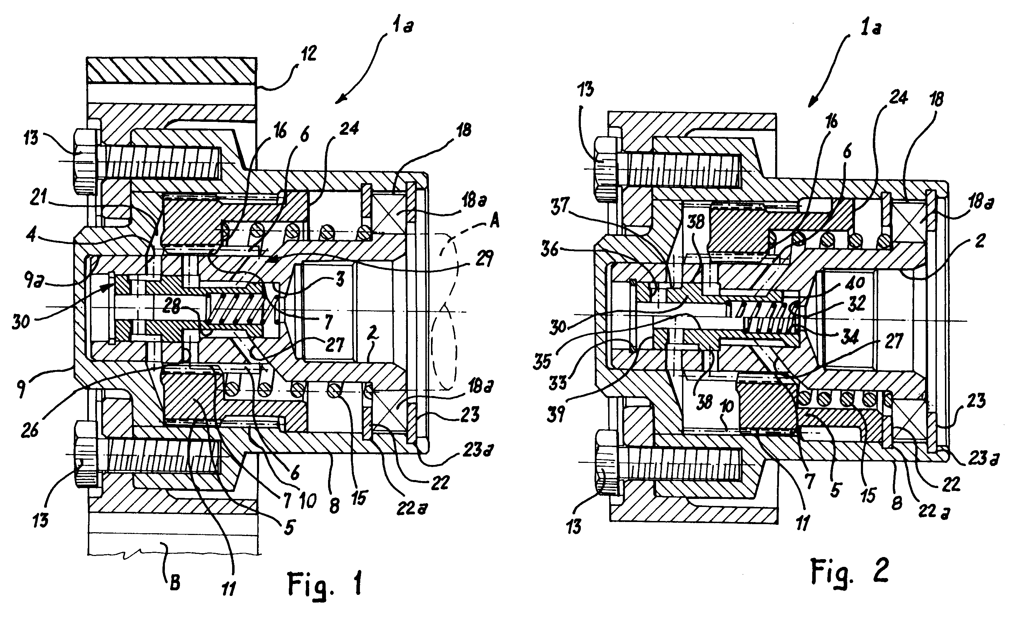

With specific reference to the first embodiment of this invention as shown in Figures 1 and 2, said means comprise a plurality of holes 26 passed through the skirt of the hub 2 a predetermined distance away from the inner surface of the cover 9, a further plurality of holes 27 also through the skirt of the hub 2 and open to an area close to the toothing 7 on the side facing toward the flange 18, and an annular conduit 28, to be described, which is arranged to communicate the holes 26 and 27 with one another. Said holes 26, 27 and the annular conduit 28 jointly define a discharge port for the pressurized working medium fed into the chamber 21 as generally shown at 29 in the drawings.

It is to be observed that holes 26 would be normally shut off by the plunger 5 to cover the port 29 when the plunger occupies its first end-of-travel position, and are freed at least in part with the plunger moved to the intermediate position shown in upper area of Figure 2.

For moving the plunger further, from the intermediate position to the second end-of-travel position thereof, additional shut-off means are provided independent of the plunger 5 which include a tubular slide valve distributor generally shown at 30. The distributor 30 is movable axially within the conduit 3 of the hub 2 through a stroke distance limited between a shoulder 32 and a ring stopper 33; also, it is biased to an abutment position against the ring 33 by a spring 34, and formed axially with a cavity 35.

Said distributor has a plurality of radial holes 36 in communication with conduit 3 at one end, and with conduits 4, via a connection provided by a second annular conduit 37, at the other end. The cylindrical shoulder 38 on the distributor 30 between the annular conduits 28 and 37 is arranged to shut off the discharge port 29 with the distributor 30 at the abutment position against the shoulder 32.

It also has axially opposed surfaces 39, 40 with different surface areas whereby, when subjected to the action of the pressurized working medium employed for driving the plunger 5, they would be applied oppositely directed forces. Owing to the surface 39 being larger than the surface 40, the resultant of such forces will oppose in any case the elastic bias from the spring 34; however, the distributor 30 will still remain set close against the ring 33 before a working medium pressure level is reached whereat said resultant force overcomes the thrust from the spring 34. Said surfaces 39 and 40 jointly define a piston member applying, to the distributor 30, a force equal to the above-mentioned resultant force.

The operative position shown in Figure 1 reflects a condition in which the camshaft A and cogged pulley 12 are in a selected relative angular relationship (timing) and no oil is supplied under pressure into the chamber 21. From this position, as oil or another working medium is supplied under pressure into the conduit 3 at a pressure level within a first predetermined range adequate to develop a thrust force on the plunger 5 effective to move it toward the flange 18 against the bias force of the spring 15, said plunger will tend to move away from the cover 9 along the axis of the hub 2. Since the plunger is keyed to the hub 2, it maintains a fixed angular relationship with the hub. On the other hand, due to the helical toothings 10 and 11 intervening between the plunger 5 and the case 8, the axial translation of the plunger will bring about a rotation of the case 8, and hence of the pulley 2, relatively to the hub and the camshaft A. This rotational movement corresponds to a change in the relative angular positions (timing) of the camshaft A and the crankshaft which drives the timing belt B entrained on the cogged pulley 12.

By sizing the distributor 30 and spring 34 such that, for that pressure range of the working medium, the resultant of the forces acting on the distributor with an axial component is in all cases smaller than the thrust force from the spring 34, the distributor 30 is held close against the ring 33, at a position which leaves the discharge port 26 uncovered. This same port is shut off, however, by the plunger 5 until the latter reaches the desired intermediate position. On reaching this intermediate position, the consequent opening, at least partway, of the discharge port 26 causes the plunger 5 to stop. Thus, a first timing variation is accomplished which is, for a given pitch of the helical toothing 10, 11, proportional to the stroke distance travelled by the plunger 5 from the first end-of-travel position to the intermediate position now reached.

By then supplying said working medium at a second pressure level whereby the resultant of the forces acting with an axial component on the distributor 30 is in all cases greater than the thrust force from the spring 34, the distributor 30 will be caused to move to a position where it shuts off the discharge port 26, as shown in the lower area of Figure 2, while a further movement of the plunger 5 is allowed from the intermediate position to the second end-of-travel position.

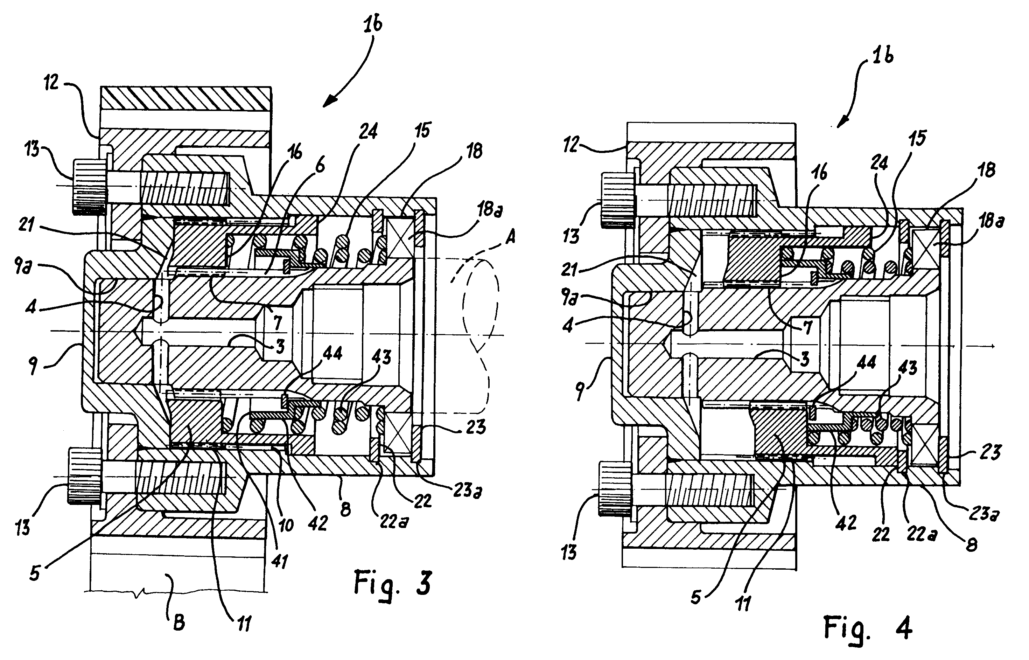

Making now reference to the modified embodiment of the timing variator shown in Figures 3 and 4, the stopper means for halting the movement of the plunger 5 at a position intermediate the two end-of-travel positions comprise a halting shoulder 41 defined on a sleeve 42 and effective to interfere with the plunger 5 travel by abutting against the shoulder 16 of the latter on reaching the selected intermediate position.

The sleeve 42 is slidable over the hub 2 and biased by a spring 43 toward a position close against a ring stopper 44 provided on the hub 2 at a location which corresponds to the intermediate position sought for the plunger, as specified hereinabove; further, the ring stopper 44 is positioned such that the spring 43 will be subjected to a predetermined amount of axial pre-load.

When the working medium for actuating the variator of Figure 2 is supplied into the chamber 21 at pressure level within a first selected range, adequate to overcome the bias force of the spring 15 but not the combined force of the two springs 15 and 43, the plunger 5 is caused to traslate over the hub 2 toward the flange 18 until it abuts on the shoulder 41 of the sleeve 42. The stopper means will be active until the pressure of the working medium is inadequate to overcome the combined actions of the springs 15 and 43. Here again, a first change occurs in the relative timing of the cogged pulley 12 and the hub 2.

By varying the pressure at which the working medium is supplied to the chamber 21 until the combined elastic bias of the two springs 15 and 43 is overcome, the sleeve 42 will be caused to traslate axially over the hub 2 together with the plunger 5 until the latter reaches its second end-of-travel position. The stopper means would be de-actuated in this case.

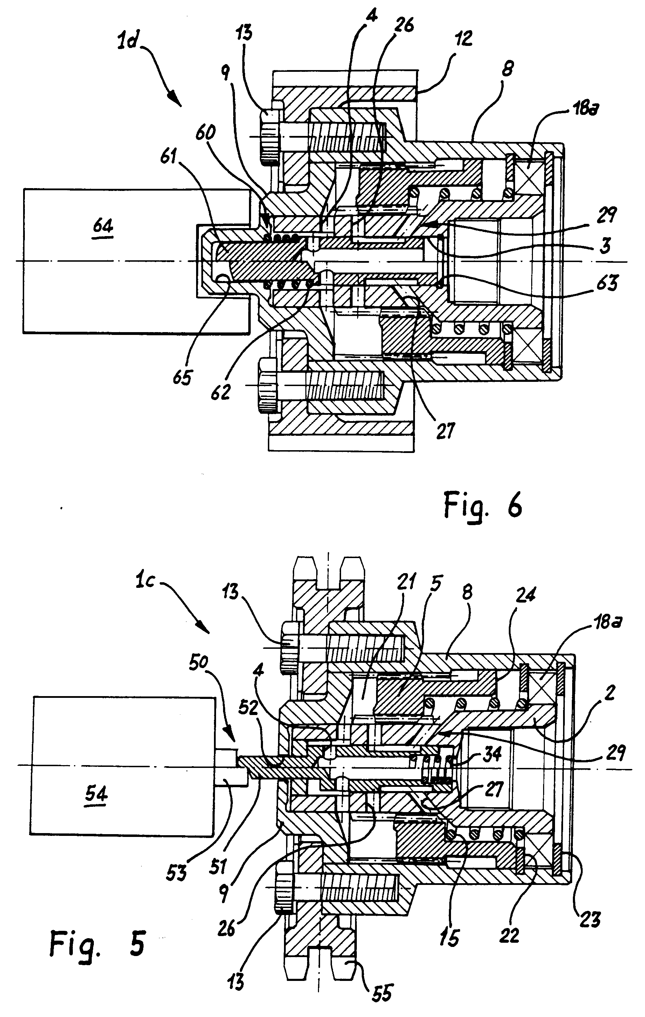

The timing variator embodiment 1c shown in Figure 5 differs from the first embodiment previously described mainly by the shapes of the distributor and its actuator. The distributor is generally shown here at 50 and comprises a lug 51 adapted to be slidable through a hole 52 formed axially in the cover 9 of case 8. Said lug has a free end which is preferably rounded to provide a substantially spottype of rubbing contact with the confronting end of a rod 53 of a linear actuator 54. As an example, this actuator 54 could be provided by a solenoid having the rod 53 for its plunger. Moreover, in variator 1c, the cogged pulley arranged to transmit the motion from the crankshaft to the camshaft is preferably replaced by a sprocket wheel 55, this embodiment being especially suited to operation with oil bath drives.

The timing variator embodiment 1d shown in Figure 6 differs from embodiment 1c by that the case 8 is designed to define, at the location of the cover 9, a hollow axial projection forming a sealed enclosure 65 for a lug 61 of the distributor 60 which is made of a ferromagnetic material. The distributor 60 is normally biased toward a position where it shuts off the discharge port 29 by a spring 62, which holds the distributor abutted against a ring stopper 63 placed here at the conduit 3 end facing toward the camshaft. Said distributor is urged against the bias of said spring 62 to free the discharge port by the action of a solenoid 64 so designed and arranged as to apply the distributor 60 urging action, when energized, through the wall of the enclosure 65. Thus, the case 8 is fully sealed on the wheel 12 side, which wheel would be usually external of the engine.

The invention achieves therefore its object and affords a number of advantages. Among these is, for instance, the fact that it can ensure accurate setting of the plunger and, hence, accurate variation of the timing, at the desired intermediate position as well as the customary end-of-travel positions. In addition, with specific reference to embodiments 1a,c,d as described, said accurate setting can be achieved for the plunger while keeping the maximum pressure level required to move the plunger to the second end-of-travel position relatively low.

## Claims

1. A timing variator for changing the relative timing of a shaft (A) and a drive (12) associated therewith, comprising:
a hub (2) adapted to be coupled rotatively with said shaft;
an annular plunger (5) fitted over said hub for axial translation therealong;
a case (8) surrounding said annular plunger to define a feed chamber in co-operation therewith for a pressurized working medium, said case being entrained rotatively by said drive (12);
feeding means for supplying said pressurized working medium to said feed chamber; and
toothing-type coupling means (6,7;10,11) so arranged between said hub and said annular plunger, as well as between said annular plunger and said case, as to bring about a change in the relative angular position of said hub and said case consequently to longitudinal movement of the plunger relatively to said hub;
said plunger being movable within said case and relatively to said hub by the action of said pressurized working medium, from a first end-of-travel position toward a second end-of-travel position against a spring means (15) biasing the plunger toward said first position, said variator further comprising stopper means (26) effective to interfere with the travel movement of said plunger relative to said hub in order to bring the plunger to a stop at at least one predetermined position intermediate between said end-of-travel positions characterised in said stopper means (26) comprising at least one discharge port (26) for discharging said working medium from said chamber, said port being shut off with said plunger positioned between said first end-of-travel position and said intermediate position, and being at least partway freed with said plunger at said intermediate position, means (30,34; 50,54; 60,64) being provided for selectively shutting off said port irrespective of said plunger to actuate the plunger movement from said intermediate position to the second end-of-travel position, said feed chamber being so positioned relatively to said discharge port and to said feeding means as to be directly fed with said pressurized medium independently on whether said discharge port is open or closed.

2. A timing variator according to Claim 1, wherein said means of shutting off said port comprise a slide valve distributor (30, 50, 60) and means (34,39,40; 54,64) for selectively moving said distributor toward and away from a position whereat said port is shut off.

3. A timing variator according to Claim 2, wherein said means for moving said distributor comprise a spring (34,62) elastically biasing said distributor toward one of its positions whereat said port would be shut off and non-shut off, respectively, and an actuator (54,64) acting on said distributor to move it toward the other of its positions against the bias of said spring.

4. A timing variator according to Claim 3, wherein said distributor has a control lug (51,61) and said actuator is arranged to act on said lug from outside said case.

5. A timing variator according to Claim 4, wherein said control lug is made of a ferromagnetic material, and said actuator comprises a solenoid arranged to act selectively on said lug by means of a magnetic coupling.

6. A timing variator according to Claim 3, wherein the distributor is mounted in an intake conduit (3) for the working medium to said chamber extending axially through the hub, and has two axially opposed surfaces (39,40) with different surface areas subjected to the pressure of said working medium and jointly defining a piston driven by said working medium against the bias of spring means (34) urging said distributor toward a position whereat said port is not shut off.

7. A timing variator for changing the relative timing of a shaft (A) and a drive (12) associated therewith, comprising:
a hub (2) adapted to be coupled rotatively with said shaft;
an annular plunger (5) fitted over said hub for axial translation therealong;
a case (8) surrounding said annular plunger to define a feed chamber in co-operation therewith for a pressurized working medium, said case being entrained rotatively by said drive (12); and
toothing-type coupling means (6,7;10,11) so arranged between said hub and said annular plunger, as well as between said annular plunger and said case, as to bring about a change in the relative angular position of said hub and said case consequently to longitudinal movement of the plunger relatively to said hub;
said plunger being movable within said case and relatively to said hub by the action of said pressurized working medium, from a first end-of-travel position toward a second end-of-travel position against a spring means (15) biasing the plunger toward said first position, said variator further comprising stopper means (26) effective, upon actuation, to interfere with the travel movement of said plunger relative to said hub in order to bring the plunger to a stop at at least one predetermined position intermediate between said end-of-travel positions characterized in said stopper means (26) comprising a shoulder (41) placed along the travel path of the plunger at a location intermediate the end-of-travel positions, and being resilient in a direction toward said second end-of-travel position.

8. A timing variator according to Claim 7, wherein said shoulder is defined on a sleeve (42) fitted slidably over said hub and being spring biased toward said intermediate position by a spring (43) acting in parallel with said spring means (15).

9. A timing variator according to Claim 8, wherein said sleeve is urged with a predetermined elastic load against a ring stopper (44) provided on said hub.

## Patentansprüche

1. Steuerzeit-Variator zum Ändern der Steuerzeit einer Welle (A) gegenüber einem damit verbundenen Antrieb (12); mit
einer Nabe (2), die in Drehrichtung mit der Welle gekoppelt werden kann;
einem ringförmigen Kolben (5), der über der Nabe zwecks einer Axialbewegung längs dazu befestigt ist;
einem Gehäuse (8), das den ringförmigen Kolben umgibt, um eine Zuführkammer für ein damit zumsammenwirkendes unter Druck stehendes Arbeitsmedium festzulegen, wobei das Gehäuse durch den Antrieb (12) in Drehrichtung mitgeführt wird;
einer Zuführeinrichtung zum Liefern des unter Druck stehenden Arbeitsmediums zur Zuführkammer; und
einer zahnartigen Koppeleinrichtung (6, 7; 10, 11), die derart zwischen der Nabe und dem ringförmigen Kolben wie auch zwischen dem ringförmigen Kolben und dem Gehäuse angeordnet ist, um eine Änderung der relativen Winkellage der Nabe zum Gehäuse als Folge einer Längsbewegung des Kolbens gegenüber der Nabe zustande zu bringen;
wobei der Kolben innerhalb des Gehäuses und gegenüber der Nabe durch den Einfluß des unter Druck stehenden Arbeitsmediums aus einer ersten Endstellung zu einer zweiten Endstellung gegen eine Federeinrichtung (15) bewegbar ist, die den Kolben gegen die erste Stellung vorspannt, wobei der Variator außerdem eine Ansperrvorrichtung (26) aufweist, die die Vorschubbewegung des Kolbens gegenüber der Nabe unterbrechen kann, um den Kolben zu einem Halt in zumindest einer vorbestimmten Stellung zwischen den Endstellungen zu bringen, dadurch gekennzeichnet, daß die Absperrvorrichtung (26) zumindest einen Auslaufanschluß (26) aufweist, um das Arbeitsmedium aus der Kammer ausströmen zu lassen, wobei dieser Anschluß durch den Kolben zwischen erster Endstellung und Zwischenstellung verschlossen wird und zumindest teilweise vom Kolben in der Zwischenstellung freigelegt wird, daß eine Einrichtung (30, 34; 50, 54; 60, 64) zum wahlweisen Verschließen dieses Anschlusses ungeachtet des Kolbens vorgesehen ist, um die Kolbenbewegung aus der Zwischenstellung in die zweite Endstellung in Gang zu bringen, wobei die Zuführkammer so gegenüber dem Auslaufanschluß und der Zuführeinrichtung angeordnet ist, daß sie unmittelbar mit dem unter Druck stehenden Medium unabhängig davon beliefert wird, ob der Auslaufanschluß offen oder geschlossen ist.

2. Steuerzeit-Variator nach Anspruch 1, wobei die Einrichtung zum Verschließen des Anschlusses einen Gleitventilverteiler (30, 50, 60) und eine Einrichtung (34, 39, 40; 54, 64) zum wahlweisen Bewegen des Verteilers hin und weg von einer Stellung aufweist, wo der Anschluß verschlossen ist.

3. Steuerzeit-Variator nach Anspruch 2, wobei die Einrichtung zum Bewegen des Verteilers eine Feder (34, 62) aufweist, die den Verteiler elastisch gegen eine seiner Stellungen vorspannt, wo der Anschluß verschlossen bzw. geöffnet sein sollte, und ein Stellglied (54, 64), das auf den Verteiler einwirkt, um ihn gegen die andere seiner Stellungen gegen die Vorspannung der Feder zu bewegen.

4. Steuerzeit-Variator nach Anspruch 3, wobei der Verteiler einen Steueransatz (51, 61) aufweist und das Stellglied so angeordnet ist, daß es auf den Ansatz von der Außenseite des Gehäuses her einwirkt.

5. Steuerzeit-Variator nach Anspruch 4, wobei der Steueransatz aus ferromagnetischem Material und das Stellglied aus einem Solenoid besteht, das wahlweise auf den Ansatz aufgrund einer magnetischen Kopplung einwirken kann.

6. Steuerzeit-Variator nach Anspruch 6, wobei der Verteiler in einem Einlaßkanal (3) für das Arbeitsmedium zur Kammer befestigt ist, die sich axial durch die Nabe erstreckt und zwei axial gegenüberliegende Oberflächen (39, 40) mit unterschiedlichen Oberflächenbereichen aufweist, die dem Druck des Arbeitsmediums unterworfen sind und die zusammen einen Kolben bilden, der durch das Arbeitsmedium gegen die Vorspannung einer Federeinrichtung (34) angetrieben wird, die den Verteiler in eine Stellung zwingt, wo der Anschluß nicht verschlossen ist.

7. Steuerzeit-Variator zum Ändern der Steuerzeit einer Welle (A) gegenüber einem damit verbundenen Antrieb (12), mit:
einer Nabe (2), die in Drehrichtung mit der Welle gekoppelt werden kann;
einem ringförmigen Kolben (5), der über der Nabe zwecks einer Akialbewegung dazu befestigt ist;
einem Gehäuse (8), das den ringförmigen Kolben umgibt, um eine Zuführkammer für ein damit zusammenwirkendes unter Druck stehendes Arbeitsmedium festzulegen, wobei das Gehäuse durch den Antrieb (12) in Drehrichtung mitgeführt wird; und
einer zahnartigen Koppeleinrichtung (6, 7; 10, 11), die derart zwischen der Nabe und dem ringförmigen Kolben wie auch zwischen dem ringförmigen Kolben und dem Gehäuse angeordnet ist, um eine Änderung der relativen Winkellage der Nabe zum Gehäuse als Folge einer Längsbewegung des Kolbens gegenüber der Nabe zustande zu bringen;
wobei der Kolben innerhalb des Gehäuses und gegenüber der Nabe durch den Einfluß des unter Druck stehenden Arbeitsmediums aus einer ersten Endstellung zu einer zweiten Endstellung gegen eine Federeinrichtung (15) bewegbar ist, die den Kolben gegen die erste Position vorspannt, wobei der Variator außerdem eine Absperrvorrichtung (26) aufweist, die bei einem in Gangsetzen die Vorschubbewegung des Kolbens gegenüber der Nabe unterbrechen kann, um den Kolben in zumindest einer vorgegebenen Stellung zwischen den Endstellungen zum Halten zu bringen, dadurch gekennzeichnet, daß die Absperrvorrichtung (26) eine Schulter (41) aufweist, die längs des Vorschubwegs des Kolbens an einer Stelle zwischen den Endstellungen angeordnet ist, und die in einer Richtung in Richtung auf die zweite Endstellung federnd ist.

8. Steuerzeit-Variator nach Anspruch 7, wobei die Schulter auf einer Hülse (42) begrenzt ist, die gleitend über der Nabe befestigt ist und die gegen die Zwischenstellung durch eine Feder (43) vorgespannt ist, die parallel zur Federeinrichtung (15) wirkt.

9. Steuerzeit-Variator nach Anspruch 8, wobei die Hülse mit einer vorgegebenen federnden Belastung gegen einen Federring (44) drückt, der auf der Nabe vorgesehen ist.

## Revendications

1. Variateur de synchronisation destiné à modifier la synchronisation relative d'un arbre (A) et d'un organe de transmission (12) qui lui est associé, comprenant :
un moyeu (2) destiné à être couplé en rotation à l'arbre,
un plongeur annulaire (5) monté sur le moyeu et destiné à se déplacer axialement en translation le long de celui-ci,
un carter (8) entourant le plongeur annulaire afin qu'il délimite une chambre d'alimentation en coopération avec lui pour un fluide de travail sous pression, le carter étant entraîné en rotation par l'organe de transmission (12),
un dispositif d'alimentation destiné à transmettre le fluide de travail sous pression à la chambre d'alimentation, et
un dispositif d'accouplement (6, 7 ; 10, 11) de type denté, disposé entre le moyeu et le plongeur annulaire ainsi qu'entre le plongeur annulaire et le carter afin qu'il provoque un changement de position angulaire relative du moyeu et du carter lors du déplacement longitudinal du plongeur par rapport au moyeu,
le plongeur étant mobile dans le carter et par rapport au moyeu sous l'action du fluide de travail sous pression, d'une première position de fin de course vers une seconde position de fin de course malgré la force d'un dispositif à ressort (15) qui rappelle le plongeur vers la première position, le variateur comprenant en outre un dispositif (26) à organe d'arrêt destiné à perturber le mouvement de déplacement du plongeur par rapport au moyeu de manière que le plongeur soit arrêté à au moins une position prédéterminée comprise entre les positions de fin de course, caractérisé en ce que le dispositif à organe d'arrêt (26) comprend au moins un canal d'évacuation (26) destiné à évacuer le fluide de travail de la chambre, le canal étant fermé par le plongeur placé entre la première position de fin de course et la position intermédiaire et étant dégagé au moins en partie lorsque le plongeur est en position intermédiaire, un dispositif (30, 34 ; 50, 54 ; 60, 64) étant destiné à fermer sélectivement le canal indépendamment du plongeur pour commander le déplacement du plongeur de la position intermédiaire vers la seconde position de fin de course, la chambre d'alimentation étant disposée par rapport au canal d'évacuation et au dispositif d'alimentation de manière qu'elle soit alimentée directement en fluide sous pression indépendamment du fait que le canal d'évacuation est ouvert ou fermé.

2. Variateur de synchronisation selon la revendication 1, dans lequel le dispositif destiné à boucher le canal comprend un distributeur à tiroir (30, 50, 60) et un dispositif (34, 39, 40 ; 54, 64) destiné à déplacer sélectivement le distributeur dans un sens et dans l'autre par rapport à une position dans laquelle le canal est fermé.

3. Variateur de synchronisation selon la revendication 2, dans lequel le dispositif de déplacement du distributeur comporte un ressort (34, 62) rappelant élastiquement le distributeur vers l'une de ses positions à laquelle le canal est fermé et n'est pas fermé respectivement, et un organe de manoeuvre (54, 64) agissant sur le distributeur afin qu'il soit déplacé vers l'autre de ses positions malgré la force de rappel du ressort.

4. Variateur de synchronisation selon la revendication 3, dans lequel le distributeur possède une patte de commande (51, 61), et l'organe de manoeuvre est destiné à agir sur la patte depuis l'extérieur du carter.

5. Variateur de synchronisation selon la revendication 4, dans lequel la patte de commande est formée d'un matériau ferromagnétique, et l'organe de manoeuvre comprend un électro-aimant destiné à agir sélectivement sur la patte à l'aide d'un accouplement magnétique.

6. Variateur de synchronisation selon la revendication 3, dans lequel le distributeur est monté dans un conduit d'admission (3) du fluide de travail dans la chambre, disposé axialement dans le moyeu, et il a deux faces axialement opposées (39, 40) ayant des aires différentes soumises à la pression du fluide de travail et délimitant ensemble un piston entraîné par le fluide de travail malgré la force de rappel du dispositif à ressort (34) qui repousse le distributeur vers une position dans laquelle le canal n'est pas bouché.

7. Variateur de synchronisation destiné à changer la synchronisation relative d'un arbre (A) et d'un organe de transmission (12) qui lui est associé, comprenant :
un moyeu (2) destiné à être couplé en rotation avec l'arbre,
un plongeur annulaire (5) monté sur le moyeu afin qu'il se déplace axialement en translation le long du moyeu,
un carter (8) entourant le plongeur annulaire afin qu'il délimite une chambre d'alimentation en coopération avec lui, pour un fluide de travail sous pression, le carter étant entraîné en rotation par l'organe de transmission (12), et
un dispositif d'accouplement (6, 7 ; 10, 11) du type denté disposé entre le moyeu et le plongeur annulaire ainsi qu'entre le plongeur annulaire et le carter afin qu'il provoque un changement de position annulaire relative du moyeu et du carter lors du déplacement longitudinal du plongeur par rapport au moyeu,
le plongeur étant mobile dans le carter et par rapport au moyeu sous l'action du fluide de travail sous pression, d'une première position de fin de course vers une seconde position de fin de course malgré la force d'un dispositif de rappel (15) qui rappelle le plongeur vers la première position, le variateur comprenant en outre un dispositif (26) à organe d'arrêt qui, lorsqu'il est commandé, perturbe le mouvement de déplacement du plongeur par rapport au moyeu afin qu'il provoque l'arrêt du plongeur à au moins une position intermédiaire prédéterminée comprise entre les positions de fin de course, caractérisé en ce que le dispositif à organe d'arrêt (26) comporte un épaulement (41) placé le long du trajet de déplacement du plongeur à un emplacement compris entre les positions de fin de course, et il possède des propriétés élastiques vers la seconde position de fin de course.

8. Variateur de synchronisation selon la revendication 7, dans lequel l'épaulement est délimité sur un manchon (42) monté afin qu'il coulisse sur le moyeu et qui est rappelé élastiquement vers la position intermédiaire par un ressort (43) agissant en parallèle avec le dispositif à ressort (15).

9. Variateur de synchronisation selon la revendication 8, dans lequel le manchon est repoussé par une force élastique prédéterminée contre un organe d'arrêt (44) en forme d'anneau disposé sur le moyeu.
